# EUROPÄISCHE PATENTSCHRIFT

(11) **EP 2 302 472 B1**
(45) Veröffentlichungstag und Bekanntmachung des Hinweises auf die Patenterteilung: **20.11.2019**
(21) Anmeldenummer: 10008717.0
(22) Anmeldetag: 20.08.2010
(51) Int. Cl.: G05B 19/042

(54) **Steuerungssystem zum Steuern von sicherheitskritischen Prozessen**
Control system for safety critical processes
Système de contrôle de processus critiques pour la sécurité

(30) Priorität: 23.09.2009 DE 102009042368
(43) Veröffentlichungstag der Anmeldung: 30.03.2011
(73) Patentinhaber: Phoenix Contact GmbH & Co. KG, 32825 Blomberg (DE)
(72) Erfinder: Schmidt, Joachim, 31812 Bad Pyrmont (DE); Horn, Steffen, 32825 Blomberg (DE)
(74) Vertreter: Herden, Andreas F.

(56) Entgegenhaltungen:
- EP-A1- 1 653 308
- EP-A2- 1 054 309
- DE-A1- 19 904 893
- DE-A1- 19 928 517
- BRUEGGER B: "VIRTUELL VERNETZT ETHERNET-TECHNIK FUER LOCAL UND METROPOLITAN AREA NETWORKS", NET - ZEITSCHRIFT FUER KOMMUNIKATIONSMANAGEMENT, NET VERLAGSSERVICE, WOLTERSDORF, DE, Bd. 55, Nr. 10, 1. Januar 2001 (2001-01-01), Seiten 48-50, XP001103587, ISSN: 0947-4765

## Beschreibung

### Gebiet der Erfindung

Die Erfindung betrifft ein Steuerungssystem zum Steuern von sicherheitskritischen Prozessen in einer automatisierten Anlage über ein Kommunikations-Netzwerk, insbesondere über ein Bus-System.

### Hintergrund der Erfindung

Zur Reduzierung eines Risikos für Mensch oder Umwelt werden insbesondere in automatisierten Anlagen Sicherheitsfunktionen realisiert. Einfache Beispiele hierfür sind die Abschaltung einer Maschine nach Drücken eines Not-Aus-Tasters oder das Anhalten eines Roboters, wenn eine Person in den Sicherheitsbereich des Roboters eintritt und dabei z.B. eine Lichtschranke unterbricht oder von einem ein Lichtgitter erfasst wird, welches den Sicherheitsbereich des Roboters überwacht oder eine überwachte Zugangstür öffnet. Bei besonders sicherheitskritischen Prozessen kann es auch erforderlich sein, größere Teile einer komplexen Anlage oder sogar die gesamte Anlage herunter zu fahren, wenn bestimmte Sicherheitsfunktionen aktiviert werden.

Hierfür werden fehlersichere Automatisierungssysteme eingesetzt. Im Allgemeinen realisieren fehlersichere Automatisierungssysteme einerseits die eigentliche Sicherheitsfunktion wie z.B. Not-Aus-Schaltung, Zweihand-Schaltung, Betriebsartenwahlschalter etc., zum anderen umfassen fehlersichere Automatisierungssysteme fehlererkennende und fehlerbeherrschende Maßnahmen z.B. nach in Standards festgelegten Mechanismen (z.B. nach IEC 61508, ISO 13849 etc.). Diese Mechanismen sind dem Fachmann grundsätzlich bekannt.

In bekannten Anlagen werden abhängig von der Ausdehnung der Anlagen und vom Automatisierungsgrad Kommunikationssysteme verwendet, die dezentrale E/A-Geräte und Steuerungen verbinden. Für den Transport von sicherheitstechnischen Daten werden diese Netzwerke durch sichere Netzwerkprotokolle unterstützt. Die sicheren Daten werden dabei entweder über eine parallele sichere Signalverdrahtung oder integriert über das Kommunikationssystem übertragen.

Bei der integrierten Übertragung geht der verwendete Signalfluss typischerweise von einer zentralen Sicherheitstechnik aus, in der die sicheren Eingangssignale zur sicheren Steuerung transportiert werden, dort verarbeitet werden (Sichere Applikation) und dann zu den entsprechenden Aktoren transportiert werden. Fehler können nun z.B. in Hard- und Firmware der Automatisierungsgeräte, in Infrastrukturkomponenten der Netzwerke (z.B. Feldbusse, Ethernet, ...) und während der Datenübertragung durch äußere Einflüsse wie z.B. EMV-Störungen auftreten.

Beispielsweise ist in der DE 103 53 950 A1 ein Steuerungssystem beschrieben, bei welchem die Steuereinheit zum Steuern der sicherheitskritischen Prozesse feldbusunabhängig z.B. an eine Multiport-Memory-Schnittstelle des Busmasters angeschlossen ist.

In der Automatisierungstechnik gibt es derzeit zwei Tendenzen. Einerseits eine Dezentralisierung der Steuerungsfunktion und andererseits eine Integration der Sicherheitstechnik in die Steuerungs- und Netzwerktechnik. Bei der Dezentralisierung der Steuerungsfunktion wird diese typischerweise weiter in die Ausgangsebene verlagert. So wird z.B. in Antrieben die (nicht sichere) Steuerungsfunktion in begrenztem Umfang mit integriert.

Mit der Integration der Sicherheitstechnik in Steuerungen und Netzwerke werden starke Abhängigkeiten im Applikationsprozess erzeugt. Diese Abhängigkeiten führen zu einer komplexeren Projektierung und Programmierung der Systeme. Dies steht in unerwünschtem Gegensatz zum Aspekt der Einfachheit von Sicherheitstechnik bezüglich Handhabung in allen Phasen des Lebenszyklusses in der Automatisierungstechnik. Dies führt einerseits zu einer schleppenden Akzeptanz beim Übergang der konventionellen hart-verdrahteten Sicherheitstechnik auf Basis von Sicherheitsrelais und andererseits zu fehlerbehafteter Nutzung und mangelnder Verfügbarkeit der Anlage durch so genannte Fehlauslösungen der Sicherheitsfunktion.

Im Sinne einer einfachen Handhabung und Modularisierbarkeit von fehlersicheren Automatisierungssystemen wird die gesamte Sicherheitsfunktion einer Anlage in kleine überschaubare, lokal begrenzbare und einfach verifizierbare Module aufgeteilt. Dies entspricht der Herangehensweise der heute mit Sicherheitstechnik vertrauten Personen bei der Anlagenautomatisierung. Zudem sind so Anlagenmodifikationen und -erweiterungen einfacher möglich, ohne dass schon verifizierte Anlagenteile noch einmal nachverifiziert werden müssen. Des Weiteren entspricht die Modularisierung und Trennung der Sicherheitsfunktion von Standard-Funktionen den Anforderungen aktueller Sicherheitsstandards.

Ein weiterer Vorteil für den Anwender ergibt sich in der Möglichkeit, die dezentralen Sicherheitsmodule Netzwerkunabhängig und Steuerungsunabhängig zu gestalten. Hierdurch werden sie unabhängig von einem bestimmten Steuerungsanbieter. Das bedeutet, das sie bei notwendigem Wechsel der Standard-Steuerung und/oder des Netzwerkes - bedingt durch nicht sicherheitsrelevante Anforderungen des Zielmarktes - bei der eingesetzten Sicherheitstechnik und den verifizierten Sicherheitsmodulen bleiben können. Trotz der möglichen Aufteilung und Dezentralisierung von lokal begrenzten Sicherheitsfunktionen sind aber auch weiterhin anlagenweite Sicherheitsfunktionen anzutreffen. So sollen z.B. das Auslösen einer Sicherheitsfunktion in einer Zelle auch Auswirkungen wie das Stillsetzen von Gefahren-bringenden Bewegungen in den benachbarten Zellen haben.

Für die Sicherstellung solcher anlagenweiter Sicherheitsfunktionen werden die dezentralen Sicherheitsmodule entweder durch eine übergeordnete zentrale Sicherheitssteuerung fehlersicher koordiniert oder besitzen die Fähigkeit, untereinander fehlersicher zu kommunizieren. Beide Ansätze führen im Gegensatz zur ursprünglichen Zielrichtung der Vereinfachung zu einem größeren Aufwand bei der Netzwerkkonfiguration, EP 1 054 309 A2 ist auf ein Verfahren zur sicheren Übertragung von Datensignalen über ein Bussystem gerichtet, wobei die Datensignale von zumindest einem Sensor erzeugt und über das Bussystem zu mindestens einem Aktor übertragen werden. Das Bussystem arbeitet nach einem Master-Slave-Prinzip. Hierbei bilden die Sensoren und Aktoren die Slaves und die Speicherprogrammierbare Steuerung bildet den Master. Über den Bus-Master ist die Speicherprogrammierbare Steuerung zur Steuerung des Datenverkehrs auf dem Datenbus mit diesem verbunden.

### Allgemeine Beschreibung der Erfindung

Die Erfindung hat sich daher die Aufgabe gestellt, ein Steuerungssystem zum Steuern von sicherheitskritischen Prozessen bereit zu stellen, welches einerseits beides, nämlich lokal begrenzte und anlagenweite Sicherheitsfunktionen ermöglicht, sowie andererseits die Netzwerkkonfiguration vereinfacht und Anwender-Fehler vermeidet.

Die Aufgabe der Erfindung wird durch den Gegenstand der unabhängigen Ansprüche gelöst. Vorteilhafte Weiterbildungen der Erfindung sind in den Unteransprüchen definiert.

Erfindungsgemäß wird ein Steuerungssystem zum Steuern von sicherheitskritischen Prozessen in einer automatisierten Anlage über ein Kommunikations-Netzwerk mit einem insbesondere nicht sicheren Kommunikationsmaster zur Steuerung der nicht sicheren Kommunikation auf dem Netzwerk und einer Mehrzahl von Netzwerkteilnehmern bereit gestellt. Von den Netzwerkteilnehmern umfassen zumindest einige sogenannte Sicherheitsdateneingangs-Objekte (SDI-Objekte) und/oder Sicherheitsdatenausgangs-Objekte (SDO-Objekte). SDI-Objekte (Safety Data Input) umfassen z.B. Sensoren und SDO-Objekte (Safety Data Output) z.B. Aktoren.

Zumindest einige der Netzwerkteilnehmer sind nun als dezentrale sichere Netzwerkteilnehmer ausgebildet und umfassen jeweils eine eigene dezentrale Sicherheitssteuerung, z.B. in Form eines sicheren Logikmoduls, zum Steuern einer sicherheitsrelevanten Applikation und weisen jeweils eine eindeutige Sicherheitsadresse auf. Die dezentralen sicheren Netzwerkteilnehmer führen die für sie relevanten Sicherheitsfunktionen und/oder Sicherheitsverknüpfungen selbst aus und kommunizieren fehlersicher miteinander, in dem sie jeweils eine automatische fehlersichere Punkt-zu-Punkt-Kommunikation mit dem nachfolgenden dezentralen sicheren Netzwerkteilnehmer durchführen. Hierdurch können übergreifende, insbesondere anlagenweite Sicherheitsfunktionen zwischen den dezentralen sicheren Netzwerkteilnehmern bereit gestellt werden, ohne dass eine zentrale Sicherheitssteuerung erforderlich ist.

Die dezentralen sicheren Netzwerkteilnehmer sind also gewissermaßen ausgewählte Netzwerkteilnehmer, welche dezentrale Sicherheitskomponenten enthalten, die durch die automatische fehlersichere Punkt-zu-Punkt-Kommunikation mit ihrem jeweiligen Nachfolger eine logische Software-Stromschiene mit definierter Datenbreite bilden. Die dezentralen Sicherheitskomponenten bzw. die dezentrale Sicherheitssteuerungen sind z.B. sichere Logikmodule. Mittels diesen wird automatisch eine anlagenweite fehlersichere Kommunikation zwischen den dezentralen sicheren Netzwerkteilnehmern etabliert. Die eindeutige Sicherheitsadresse, welche jeder dezentrale sichere Netzwerkteilnehmer aufweist, dient als jeweilige Quell- und Zieladresse bei der automatischen Etablierung der Vernetzung innerhalb der Punkt-zu-Punkt-Beziehungen. Hierfür ist insbesondere kein Netzwerkkonfigurationstool notwendig. Der Anwender kann z.B. ausschließlich durch Einstellen der Sicherheitsadressen dieser Sicherheitskomponenten die Software-Stromschiene bzw. die fehlersichere Punkt-zu-Punkt-Kommunikation konfigurieren. Die eindeutige Sicherheitsadresse kann z.B. mittels eines DIP-Schalters und/oder mittels Software in dem dezentralen sicheren Netzwerkteilnehmer festgelegt werden.

Gemäß einer besonderen Ausführungsform der Erfindung sind die dezentralen sicheren Netzwerkteilnehmer mit zugeordneten (herkömmlichen) SDI- und/oder SDO-Objekten, die jeweils keine eigene dezentrale Sicherheitssteuerung zum Steuern einer sicherheitsrelevanten Applikation aufweisen, verknüpft, und sind mit diesen zugeordneten SDI-und SDO-Objekten zu Sicherheitsinseln gruppiert, wobei jede Sicherheitsinsel zumindest einen dezentralen sicheren Netzwerkteilnehmer umfasst, an welchen die zugeordneten SDI- und/oder SDO-Objekte ohne eigene dezentrale Sicherheitssteuerung als Satelliten angeschlossen sind. Die dezentralen sicheren Netzwerkteilnehmer bzw. deren sichere Logikmodule steuern die inselinterne fehlersichere Kommunikation und die inselübergreifende fehlersichere Kommunikation, um anlagenweite Sicherheitsfunktionen bereit zu stellen. Die dezentralen Sicherheitskomponenten sind demnach sichere Logikmodule einer Sicherheitsinsel-Insel mit zusätzlich ausgestatteten Mitteln zur fehlersicheren Querkommunikation. Die dezentralen sicheren Netzwerkteilnehmer können ferner selbst als SDI- und/oder SDO-Objekte mit einem zusätzlichen sicheren Logikmodul ausgebildet sein. Somit findet einerseits innerhalb der Sicherheitsinseln eine fehlersichere Kommunikation zwischen den SDI-Objekten und SDO-Objekten zur fehlersicheren Steuerung statt und es kann andererseits mittels der fehlersicheren Punkt-zu-Punkt-Kommunikation sukzessive die gesamte Anlage heruntergefahren werden, wenn eine anlagenweite Sicherheitsfunktion betroffen ist.

Dem Anwender entstehen somit bei der Konfiguration der Sicherheitslogik der jeweiligen Sicherheitsinsel also zusätzliche Möglichkeiten der Weiterleitung von fehlersicheren Signalen durch die komplette Anlage. Verschiedene Strategien sind hierbei denkbar. Z.B. kann für jede Sicherheitsinsel eine eigene Datenleitung bereit gestellt werden und jede Sicherheitsinsel belegt fest genau eine ihr zugeordnete Datenleitung der Software-Stromschiene (alleinige Schreibrechte) und signalisiert durch den Pegel den anderen Sicherheits-Inseln (nur Leserechte) gefährliche Anlagenzustände. Ebenso sind andere Strategien bei den Zugriffsrechten auf die einzelnen Signale der anlagenweiten Software-Stromschiene möglich, womit z.B. kleine Subringe realisierbar sind.

Für die fehlersichere Punkt-zu-Punkt-Kommunikation wird insbesondere ein sicheres Kommunikationsprotokoll benutzt.

Die (insel)übergreifende bzw. anlagenweite fehlersichere Kommunikation zwischen den dezentralen sicheren Netzwerkteilnehmern wird, wie bereits ausgeführt, mittels der fehlersicheren Punkt-zu-Punkt-Kommunikation automatisch ohne Einsatz eines Netzwerkkonfigurationswerkzeugs etabliert. Daher wird von einer Software-Stromschiene gesprochen, welche mittels eines automatisch etablierten Datenflusses zwischen den sicheren Logikmodulen Hardwaretechnisch ausgelegte Signalleitungen oder eine überlagerte Sicherheitssteuerung zur fehlersicheren Kommunikation ersetzt. Die Software-Stromschiene stellt einen automatisch erzeugten sicheren Datenfluss zwischen intelligenten Sicherheitsmodulen (Logikeinheiten, netzwerkfähigen Sicherheitsschaltgeräten, Sicherheitssteuerungen) mit einer definierten Datenbreite dar. Dies ist in Form einer Aneinanderreihung von mehreren sicheren Punkt zu Punkt-Kommunikations-Beziehungen realisiert. Die Etablierung dieser aneinander gereihten Punkt-zu-Punkt-Beziehungen kann im Standard-Netzwerkmaster automatisch und ohne zusätzlichen Einsatz eines Netzwerkkonfigurationswerkzeugs erfolgen. Die Software Stromschiene ermöglicht somit eine einfache übergreifende bzw. anlagenweite sichere Kommunikation einer Mehrzahl von sicheren Netzwerkteilnehmern.

Die dezentralen sicheren Netzwerkteilnehmer der Sicherheitsinseln kommunizieren mit anderen Worten anlagenweit fehlersicher, insbesondere über einen fehlersicheren Telegrammverkehr, miteinander, um - zusätzlich zu den inselinternen Sicherheitsfunktionen - auch anlageweite Sicherheitsfunktionen bereit stellen zu können. Hierzu Vernetzen die dezentralen fehlersicheren Logikmodule automatisch und ohne eine überlagerte zentrale Sicherheitssteuerung durch den Mechanismus der logischen Software-Stromschiene. Das Software-Stromschienen-Verfahren zur Vernetzung mehrerer Sicherheitsinseln (sogenannte Safety-Inseln) kann z.B. im sogenannten SafetyBridge-System der Anmelderin ab Step 2 angewendet werden.

Die nicht sichere Kommunikation zwischen den Netzwerkteilnehmern wird von dem insbesondere nicht sicheren Kommunikationsmaster gesteuert. Das Kommunikationsnetzwerk ist insbesondere ein Bussystem, z.B. ein Feldbus mit einem nicht sicheren Standard-Bus-Master, manchmal als K-Master bezeichnet. Die SDI- und/oder SDO-Objekte ohne eigene dezentrale Sicherheitssteuerung sind ebenfalls Netzwerk- bzw. Busteilnehmer., sogenannte K-Slaves

Zur automatischen Bildung der logischen Software-Stromschiene stellen die fehlersicheren dezentralen Netzwerk- bzw- Busteilnehmer also Mittel zur Verfügung, mit deren Hilfe sich z.B. in einer überlagerten Standard-Steuerung bzw. in dem überlagerten insbesondere nicht sicheren Netzwerkmaster bzw. Kommunikationsmaster oder in anderen Netzwerkinfrastrukturkomponenten ein automatisches Routen der Telegramme zwischen den fehlersicheren dezentralen Netzwerkteilnehmern installieren lässt.

Alle Fehler, die durch das automatische Routen der Telegramme entstehen können, werden durch die Sicherheitsprotokolle in den Endpunkten erkannt.

Die Absicherung des fehlersicheren Teigrammverkehrs geschieht insbesondere ausschließlich in den fehlersicheren Endpunkten der Kommunikation (sogenanntes Black-Channel-Prinzip). Typische fehlererkennende Maßnahmen sind Zeitstempel, Redundanz, Checksumme, laufende Nummern aber auch Sender- und Empfängerkennung. Diese dient vor allem dazu, um die Eindeutigkeit der Zuordnung von Quelle und Ziel des Telegramms sicherzustellen und "Fehlleitungen" innerhalb des Standard-Kommunikationsnetzes (Black Channel) zu erkennen.

Das Prinzip des Black Channels geht von beliebigen Fehlern wie Vertauschen, Zerstören, Verfälschen von Telegrammen im Standard-Netzwerk und dessen Infrastrukturkomponenten aus. Die fehlererkennenden Maßnahmen der fehlersicheren Kommunikationsprotokolle nehmen keinen Kredit an den in den Standard-Netzwerken ebenfalls vorhandenen fehlererkennenden Maßnahmen.

In vorteilhafter Weise ermöglicht die Erfindung demnach eine automatische Etablierung einer (insel-)übergreifenden bzw. anlagenweiten fehlersicheren Kommunikation zwischen den dezentralen sicheren Netzwerkteilnehmern ohne Einsatz eines Netzwerkkonfigurationswerkzeuges. Ferner können durch die Erfindung das Applikationsprogramm vereinfacht und Anwender-Fehler vermieden werden.

Im Folgenden wird die Erfindung anhand von Ausführungsbeispielen und unter Bezugnahme auf die Figuren näher erläutert.

### Kurzbeschreibung der Figuren

Es zeigen:
- Fig. 1: Eine schematische Darstellung von autark arbeitenden unabhängigen Sicherheitsinseln,
- Fig. 2: eine schematische Darstellung einer weiteren Ausführungsform mit einer Mehrzahl von durch eine Software-Stromschiene in Reihe vernetzten Sicherheitsinseln,
- Fig. 3: eine schematische Darstellung der Punkt-zu-Punkt-Beziehungen innerhalb der Software-Stromschiene aus Fig. 2,
- Fig. 4: eine schematische Darstellung der internen Struktur eines dezentralen sicheren Netzwerkteilnehmers LPSDO und
- Fig. 5: eine schematische Darstellung der an die Software-Stromschiene angeschlossenen dezentralen sicheren Netzwerkteilnehmer.

### Detaillierte Beschreibung der Erfindung

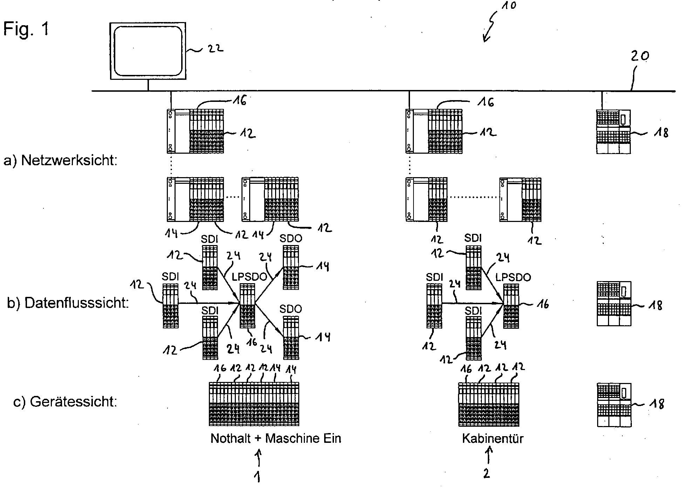

Bezug nehmend auf Fig. 1 ist Anordnung aus autark arbeitenden unabhängigen Sicherheitsinseln 1, 2 und einer optionalen kompakten Sicherheitskleinsteuerung 18 dargestellt.

Fig. 1a) zeigt das Steuerungssystem 10 zum Steuern von sicherheitskritischen Prozessen aus der Netzwerksicht. Die erste Sicherheitsinsel 1 umfasst drei SDI-Objekte 12 und zwei SDO-Objekte 14 und die zweite Sicherheitsinsel drei SDI-Objekte 12, jeweils ohne dezentrales sicheres Logikmodul. Die jeweilige Anzahl der SDI- und SDO-Objekte 12, 14 ist beispielhaft zu verstehen.

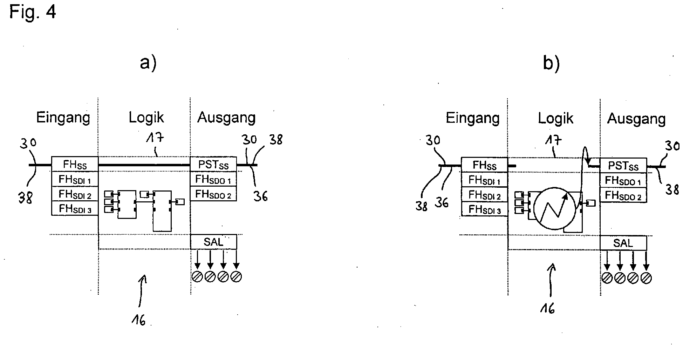

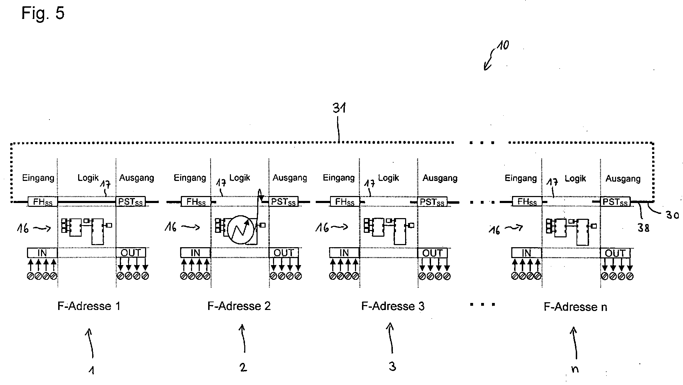

Die SDI-Objekte erstellen ein sicherheitsrelevantes Protokoll, welches von einem sicheren Logikmodul 17 (vgl Fig. 4 und 5) des dezentralen sicheren Netzwerkteilnehmers LPSDO 16 verarbeitet werden, um eine sicherheitsrelevante Funktion mittels eines der SDO-Objekte 14 auszulösen. Das sichere Logikmodul 17, welches von dem dezentralen sicheren Netzwerkteilnehmers LPSDO 16 umfasst ist, kann auch als Sicherheitsanalysator bezeichnet werden. Der dezentrale sichere Netzwerkteilnehmer 16 führt das Applikationsprogramm aus und weist in diesem Beispiel ein Sicherheitsdatenausgangsmodul auf (LPSDO). Die dezentralen sicheren Logikmodule können aber auch von Netzwerkteilnehmern mit einem Sicherheitsdateneingangsmodul oder mit einem kombinierten SDIO-Modul umfasst sein. Die sicheren Logikmodule 17 der dezentralen sicheren Netzwerkteilnehmer 16 setzen die Sicherheitsfunktionen um und schalten ggf. Anlagenteile ab. Die Sicherheitsfunktionen setzen je nach Anforderung inselinterne und/oder inselübergreifende sicherheitsrelevante Funktionen um.

Die SDI- und SDO-Objekte 12, 14 sowie die dezentralen sicheren Netzwerkteilnehmer 16 sind jeweils als Netzwerkteilnehmer in dem Netzwerk vernetzt, welches von einem nicht sicheren Netzwerkmaster oder Kommunikationsmaster 22 (sogenannter K-Master) gesteuert wird. Ferner ist noch eine Sicherheitskleinsteuerung 18 an das Netzwerk angeschlossen. In diesem Beispiel ist das Netzwerk als Bussystem 20 ausgebildet, so dass der Netzwerkmaster ein Busmaster 22 ist. Der nicht sichere Datenverkehr wird demnach von dem Busmaster 22 gesteuert und die Objekte 12, 14, 16, 18 sind K-Slaves. Das Bussystem 20 übernimmt keine sicherheitsrelevanten Aufgaben, sondern fungiert lediglich als Übertragungsmedium. Auf diese Weise können auch nicht-sichere Komponenten an das Netzwerkkabel angeschlossen werden.

Fig. 1b) zeigt das Steuerungssystem aus der Datenflusssicht. Der logische Datenfluss 24 erfolgt von den SDI-Objekten oder Eingangsmodulen 12 über die sicheren Logikmodule 17 der dezentralen sicheren Netzwerkteilnehmer 16 zu den SDO-Objekten oder Ausgangsmodulen 14.

Fig. 1c) zeigt das Steuerungssystem aus der Gerätesicht. In der Gerätesicht stellen sich die Sicherheitsinseln 1, 2 und die Sicherheitskleinsteuerung 18 dem Anwender im sogenannten Engineeringwerkzeug dar (dort ist das Netzwerk nicht sichtbar). In dem Beispiel repräsentieren die Sicherheitsinsel 1 eine sichere Maschinensteuerung mit einer Nothalt-Funktion für eine Maschine und die Sicherheitsinsel 2 die Überwachung einer Kabinentür.

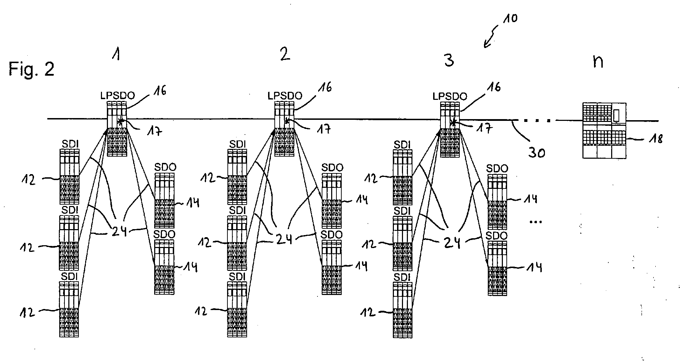

Fig. 2 bezieht sich auf die Datenflusssicht eines weiteren Steuerungssystems 10 mit einer Vielzahl von dezentralen sicheren Netzwerkteilnehmern 16 bzw. Sicherheitsinseln 1, 2, 3, ... j und einer Sicherheitskleinsteuerung 18, welche den n-ten Netzwerkteilnehmer repräsentiert. Die Sicherheitsinseln 1-3 sind explizit dargestellt und die Punkte deuten weitere Netzwerkteilnehmer bzw. Sicherheitsinseln an. Erfindungsgemäß sind die sicheren dezentralen Netzwerkteilnehmer 16 bzw. die Sicherheitsinseln 1-3 sowie die Sicherheitskleinsteuerung Busteilnehmer. Die Sicherheitsinseln umfassen jeweils einen dezentralen sicheren Netzwerkteilnehmer LPSDO 16, mit dem jeweils mehrere SDI- und/oder SDO-Objekte 12, 14 als Satelliten logisch verknüpft sind. Die dezentralen sicheren Netzwerkteilnehmer 16 sind mittels der Software-Stromschiene 30 in Reihe vernetzt, um die inselübergreifenden bzw. anlagenweiten Sicherheitsfunktionen auszuführen (vgl. Fig. 4 und 5).

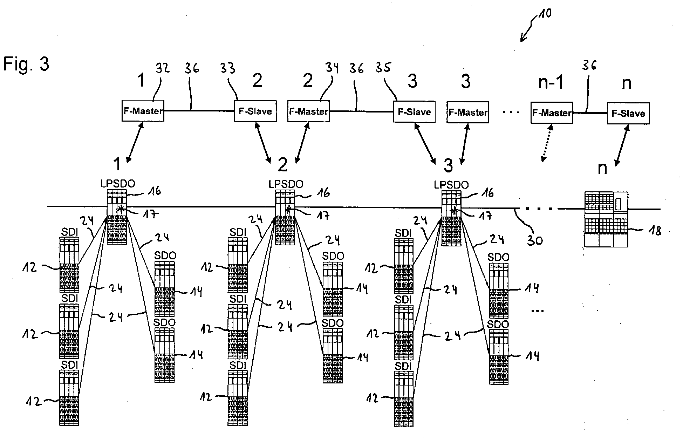

Bezug nehmend auf Fig. 3 bildet der dezentrale sichere Netzwerkteilnehmer 16 der Sicherheitsinsel 1 einen Master 32 für die sichere Kommunikation (sogenannter F-Master) mit dem dezentralen sicheren Netzwerkteilnehmer 16 der nachfolgenden Sicherheitsinsel 2, welcher diesbezüglich als Slave 33 (sogenannter F-Slave) fungiert. Der dezentrale sichere Netzwerkteilnehmer 16 der Sicherheitsinsel 2 bildet wiederum den Master 34 für die sichere Kommunikation (F-Master) mit dem dezentralen sicheren Netzwerkteilnehmer 16 der nachfolgenden Sicherheitsinsel 3, welches diesbezüglich als Slave 35 fungiert (F-Slave), usw.

Jeder dezentrale sichere Netzwerkteilnehmer 16 hat hierfür eine eindeutige Sicherheits-Adresse, die sogenannte F-Adresse. Diese dient bei der automatischen Etablierung der Vernetzung innerhalb der Punkt-zu-Punkt-Beziehungen 36 zwischen den dezentralen sicheren Netzwerkteilnehmern 16 als jeweilige Quell- und Zieladresse.

Bezug nehmend auf Fig. 4 ist die interne Struktur eines dezentralen sicheren Netzwerkteilnehmers LPSDO 16 dargestellt, welcher an die Software-Stromschiene 30 angeschlossen ist. Es ist exemplarisch nur eine Leitung 38 der Software-Stromschiene 30 dargestellt. Es können aber auch mehrere "Software-Leitungen" 38 vorgesehen sein, beispielsweise für jede Sicherheitsinsel eine eigene Software-Leitung 38. Ferner sind ein- bzw. ausgangsseitige Sicherheitskommunikationslayer FHss (F-Host Stromschiene) und PSTss (PROFIsafeDeviceTreiber Stromschiene) dargestellt.

Bezugnehmend auf Fig. 4a) ist ein Logikmodul 17 mit derzeit keiner Sicherheitsanforderung dargestellt, wohingegen in Fig. 4b) eine Sicherheitsanforderung an dem Logikmodul 17 vorliegt. Die sicherheitsrelevanten Daten, wie z.B. ein Not-Aus-Befehl, werden von dem sicheren Logikmodul 17 dann über die Kette von Punkt-zu-Punkt-Beziehungen 36 sukzessive an die nachfolgenden sicheren Logikmodule der nachfolgenden dezentralen sicheren Netzwerkteilnehmer 16 übermittelt, wenn ein sicherheitsrelevanter übergreifender Fehlerfall auftritt. Diese sicherheitsrelevanten Daten können dann automatisch vom nachfolgenden sicheren Logikmodul 17, welches ebenfalls an der Software-Stromschiene 30 angeschlossen ist, ausgewertet werden und dort ggf. ebenfalls zu einer Abschaltung führen. Dieses sukzessive Übermitteln der sicherheitsrelevanten Daten kann als "Ziehen" an einer Leitung der Software-Stromschiene im Fehlerfall interpretiert werden. Das löst die Abschaltung in den weiteren dezentralen sicheren Netzwerkteilnehmern 16 aus, wobei die Auswertung der über die Punkt-zu-Punkt-Beziehungen übermittelten sicherheitsrelevanten Daten in den nachfolgenden dezentralen sicheren Netzwerkteilnehmern 16 in der Verantwortung des jeweiligen sicheren Logikmoduls 17 liegt.

Bezug nehmend auf Fig. 5 ist ein Steuerungssystem 10 mit n an der Software-Stromschiene 30 angeschlossenen dezentralen sicheren Netzwerkteilnehmern 16 mit den Sicherheitsadressen (F-Adressen) 1, 2, 3 ... n dargestellt.

In dem sicheren Logikmodul 17 des Netzwerkteilnehmers mit der F-Adresse 2 wird ein Fehler oder eine Sicherheitsanforderung erkannt. Dieses Logikmodul 17 löst die übergreifende bzw. anlagenweite Sicherheitsfunktion aus und "zieht" gewissermaßen an der Leitung 38 der Software-Stromschiene 30, um die Sicherheitsanforderung auch den anderen dezentralen sicheren Netzwerkteilnehmern 16 zu übermitteln. Ein solches "Ziehen" an der Leitung wird softwaretechnisch in der Sicherheitslogik bzw. dem Logikmodul 17 jedes dezentralen sicheren Netzwerkteilnehmers 16 umgesetzt. Es wird das einkommende Signal des dezentralen sicheren Vorgänger-Netzwerkteilnehmers z.B. mit dem Status der eigenen Sicherheits-Insel logisch UND-verknüpft. Sobald eine Sicherheitsanforderung erkannt wird, wird das ausgehende Signal zum dezentralen sicheren Nachfolge-Netzwerkteilnehmer definiert auf 0 gezogen.

Mit anderen Worten sind die Logikmodule 17 auf der Software-Stromschiene 30 verkettet und automatisch durch die aufsteigenden F-Adressen seriell miteinander verknüpft. Die Software-Stromschiene 30 kann durch einen Loop 31 ringförmig geschlossen sein.

Das erfindungsgemäße Steuerungssystem 10 zum Steuern von sicherheitskritischen Prozessen beruht also darauf, dass anstelle einer zentralen Sicherheitssteuerung dezentrale sichere Logikmodule 17 die für sie relevanten Sicherheitsfunktionen und -verknüpfungen selbst ausführen. Die sicheren Logikmodule 17 der dezentralen sicheren Netzwerkteilnehmer 16 vernetzen automatisch und ohne eine überlagerte zentrale Sicherheitssteuerung im Kommunikationsmaster 22 oder separat an dem Bus 20 angeschlossener zentraler sicherer Steuereinrichtungen mithilfe einer logischen Software-Stromschiene 30 mit definierter Datenbreite. Für anlagenweite Sicherheitsfunktionen können diese dezentralen sicheren Logikmodule 17 fehlersicher miteinander kommunizieren. Die dezentralen sicheren Netzwerkteilnehmer 16 überwachen einerseits die fehlersichere Kommunikation innerhalb der Sicherheitsinseln 1, 2, 3 ... und führen andererseits die fehlersichere Kommunikation mit ihrem jeweiligen Nachfolger der nachfolgenden Sicherheitsinsel 1->2; 2->3 usw. aus. In dem nicht sicheren Kommunikationsmaster 22 als Teil des so genannten Black Channels werden die Standard-Telegramme zwischen den dezentralen sicheren Logikmodulen entsprechend geroutet. Beispielsweise übernimmt dies das Applikationsprogramm in Form von speziellen Kopier-Befehlen oder Kopier-Bausteinen. Diese werden je nach Buskonfiguration und Adressierung der dezentralen Netzwerk- bzw. Busteilnehmer konfiguriert und/oder parametriert. Das Routen kann aber auch im Kommunikationsmaster 22, z.B. durch Abarbeitung einer Routing-Tabelle erfolgen.

Im Sinne der Erfindung kann dieser Konfigurations- und/oder Parametrierungsaufwand deutlich reduziert werden, in dem das Applikationsprogramm selbst oder eine darunter liegende Routing - Schicht die in den fehlersicheren Kommunikationsprotokollen enthaltenen Mittel (Informationen) auswerten und automatisch die Telegramme von einer Quelle zur entsprechenden Zieladresse routen. Die Reihenfolge dieser verketteten Liste kann sich automatisch z.B. anhand der eingestellten Sicherheitsadresse der Module ergeben. Hierfür kann die Sicherheitsadresse z.B. mittels DIP-Schalter oder mittels Software in den jeweiligen sicheren Logikmodulen 17 der dezentralen sicheren Netzwerkteilnehmer 16 festgelegt werden. Z.B. kann der nicht sichere Kommunikationsmaster 22, wie vorstehend bereits angesprochen, eine Routing-Tabelle erzeugen, welche automatisch in die Netzwerkteilnehmer geladen wird. Die Vernetzungsstruktur bzw. Topologie kann sich, z.B. bei Netzwerkänderungen auch dynamisch ändern.

Die Vernetzungsstruktur der sicheren Logikmodule der dezentralen sicheren Netzwerkteilnehmer 16, bzw. die Topologie des Kommunikations-Netzwerks 20 ergibt sich dann insbesondere ausschließlich aufgrund der eingestellten Sicherheitsadresse der sicheren Logikmodule der dezentralen sicheren Netzwerkteilnehmer 16.

Gemäß einer besonderen Ausgestaltung der Erfindung ist die Vernetzungsstruktur bzw. Topologie des Kommunikations-Netzwerks 20 abhängig von dem benutzten automatischen Verknüpfungsalgorithmus. Hierbei ist z.B. auch ein ringförmiges Netzwerk möglich.

Eine beispielhafte Anwendung für das Steuerungssystem ist die automatische Steuerung von Hochregallagern.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann, ohne die Erfindung zu verlassen. Ferner ist ersichtlich, dass die Merkmale unabhängig davon, ob sie in der Beschreibung, den Ansprüchen, den Figuren oder anderweitig offenbart sind auch einzeln wesentliche Bestandteile der Erfindung definieren, selbst wenn sie zusammen mit anderen Merkmalen gemeinsam beschrieben sind.

## Patentansprüche

1. Steuerungssystem (10) zum Steuern von sicherheitskritischen Prozessen in einer automatisierten Anlage über ein Kommunikations-Netzwerk (20), wobei
- das Steuerungssystem (10) einen nicht sicheren Kommunikationsmaster (22) zur Steuerung der nicht sicheren Kommunikation auf dem Netzwerk (20) und eine Mehrzahl von Netzwerkteilnehmern (12, 14, 16, 18) umfasst,
- zumindest einige der Netzwerkteilnehmer jeweils eine eigene dezentrale Sicherheitssteuerung (17) zum Steuern einer sicherheitsrelevanten Applikation umfassen und dadurch als dezentrale sichere Netzwerkteilnehmer (16) ausgebildet sind,
- die dezentralen sicheren Netzwerkteilnehmer (16) dazu ausgebildet sind, die für sie relevanten Sicherheitsfunktionen und/oder Sicherheitsverknüpfungen selbst auszuführen, wobei die dezentralen sicheren Netzwerkteilnehmer (16) jeweils eine eindeutige Sicherheitsadresse aufweisen,
- die dezentralen sicheren Netzwerkteilnehmer (16) zu Sicherheitsinseln (1, 2, 3) gruppiert sind, wobei die Sicherheitsinseln jeweils einen dezentralen sicheren Netzwerkteilnehmer LPSDO (16) umfassen, mit dem jeweils mehrere Sicherheitsdateneingangs-Objekte (SDI-Objekte, 12) und/oder Sicherheitsdatenausgangs-Objekte (SDO-Objekte, 14) als Satelliten logisch verknüpft sind, und
- eine Kommunikation (36) zwischen den dezentralen sicheren Netzwerkteilnehmern (16) als fehlersichere Punkt-zu-Punkt-Kommunikation (36)ausgebildet ist, basierend auf einer Kette von Punkt-zu-Punkt-Beziehungen (36) von einer Sicherheitsinsel (1) zu einer nachfolgenden Sicherheitsinsel (2), wobei ein dezentraler, sicherer Netzwerkteilnehmer (16) der Sicherheitsinsel (1) einen Master (32) bildet und ein dezentraler, sicherer Netzwerkteilnehmer (16) der nachfolgenden Sicherheitsinsel (2) einen Slave bildet, so dass eine Verkettung von Master-Slave-Beziehungen zwischen Sicherheitsinseln (1,2,3) die Kette von Punkt-zu-Punkt-Beziehungen bildet, um übergreifende Sicherheitsfunktionen zwischen den dezentralen sicheren Netzwerkteilnehmern (16) bereitstellen zu können.

2. Steuerungssystem (10) nach Anspruch 1,
wobei die dezentralen sicheren Netzwerkteilnehmer (16) mit zugeordneten Sicherheitsdateneingangs- und/oder Sicherheitsdatenausgangs-Objekten (12, 14), die jeweils keine eigene dezentrale Sicherheitssteuerung zum Steuern einer sicherheitsrelevanten Applikation aufweisen, verknüpft sind, so dass die dezentralen sicheren Netzwerkteilnehmer (16) mit den zugeordneten Sicherheitsdateneingangs- und/oder den Sicherheitsdatenausgangs-Objekten (12, 14) zu Sicherheitsinseln (1, 2, 3) gruppiert sind, wobei jede Sicherheitsinsel zumindest einen dezentralen sicheren Netzwerkteilnehmer (16) umfasst.

3. Steuerungssystem (10) nach Anspruch 2,
wobei die dezentralen sicheren Netzwerkteilnehmer (16) Mittel zur fehlersicheren Querkommunikation innerhalb der Sicherheitsinseln (1, 2, 3) aufweisen.

4. Steuerungssystem (10) nach Anspruch 2 oder 3,
wobei inselübergreifende Sicherheitsfunktionen bereitgestellt sind, in dem die dezentralen sicheren Netzwerkteilnehmer (16) der Sicherheitsinseln (1, 2, 3) mittels der fehlersicheren Punkt-zu-Punkt-Kommunikation (36) inselübergreifend fehlersicher miteinander kommunizieren.

5. Steuerungssystem (10) nach einem der vorstehenden Ansprüche,
wobei eine anlagenweite fehlersichere Kommunikation zwischen den dezentralen sicheren Netzwerkteilnehmern (16) mittels der fehlersicheren Punkt-zu-Punkt-Kommunikation (36) automatisch etabliert wird.

6. Steuerungssystem (10) nach einem der vorstehenden Ansprüche,
wobei mittels des durch die fehlersichere Punkt-zu-Punkt-Kommunikation (36) automatisch etablierten Datenflusses zwischen den dezentralen sicheren Netzwerkteilnehmern eine Software-Stromschiene (30), die einen automatisch erzeugten sicheren Datenfluss zwischen intelligenten Sicherheitsmodulen mit einer definierten Datenbreite darstellt, als Ersatz für eine Hardware-Verbindung gebildet wird und insbesondere jede Sicherheitsinsel (1, 2, 3) genau eine Datenleitung (38) der Software-Stromschiene (30) fest belegt.

7. Steuerungssystem (10) nach einem der vorstehenden Ansprüche,
wobei ein sicheres Kommunikationsprotokoll für die fehlersichere Punkt-zu-Punkt-Kommunikation (36) zwischen den dezentralen sicheren Netzwerkteilnehmern (16) verwendet wird

8. Steuerungssystem (10) nach Anspruch 7,
wobei von einem Applikationsprogramm selbst oder einer darunter liegenden Routing-Schicht
i) die in dem fehlersicheren Kommunikationsprotokoll enthaltenen Daten ausgewertet werden und
ii) Telegramme der darunter liegenden Routing-Schicht automatisch von einer Quelle zur entsprechenden Zieladresse geroutet werden.

9. Steuerungssystem (10) nach einem der vorstehenden Ansprüche,
wobei die dezentralen sicheren Netzwerkteilnehmer (16) jeweils eine eindeutige Sicherheitsadresse aufweisen, die mittels eines Schalters und/oder mittels Software in dem dezentralen sicheren Netzwerkteilnehmer (16) festlegbar ist.

10. Steuerungssystem (10) nach einem der vorstehenden Ansprüche,
wobei in dem nicht sicheren Kommunikationsmaster (22) Standard-Telegramme zwischen den dezentralen sicheren Netzwerkteilnehmern (16) geroutet werden.

11. Steuerungssystem (10) nach Anspruch 10,
wobei das Routen der Standard-Telegramme von einem Applikationsprogramm in Form von Kopier-Befehlen durchgeführt wird, die in Abhängigkeit der Adressierung der dezentralen sicheren Netzwerkteilnehmer (16) konfiguriert und/oder parametriert werden.

12. Steuerungssystem (10) nach Anspruch 10,
wobei der Kommunikationsmaster (22) eine Routing-Tabelle erzeugt und anhand der Routing-Tabelle automatisch die Telegramme von der Quelle zur Zieladresse routet.

13. Steuerungssystem (10) nach einem der vorstehenden Ansprüche,
wobei die Datenbreite in dem vom nicht sicheren Kommunikationsmaster (22) gesteuerten Telegrammverkehr zwischen den Netzwerkteilnehmern für alle Punkt-zu-Punkt-Verbindungen zwischen den dezentralen sicheren Netzwerkteilnehmern (16) dieselbe ist.

## Claims

1. A control system (10) for controlling safety-critical processes in an automated system via a communications network (20), wherein
- the control system (10) comprises a non-safe communication master (22) for controlling the non-safe communication on the network (20) and a plurality of network subscribers (12, 14, 16,18);
- at least some of the network subscribers have their own decentralized safety controller (17) for controlling a safety-relevant application and are thus configured as decentralized safe network subscribers (16);
- the decentralized safe network subscribers (16) are adapted to perform the safety functions that are relevant to them and/or safety associations by themselves, the decentralized safe network subscribers (16) each having a unique safety address;
- the decentralized safe network subscribers (16) are grouped into safety islands (1,2, 3), each of the safety islands comprising a respective decentralized safe network subscriber LPSDO (16), with each of the safety islands comprising a decentralized safe network subscriber LPSDO (16) which has logically associated therewith, as satellites, a plurality of safety data input items (SDI items, 12) and/or safety data output items (SDO items, 14); and
- a communication (36) between the decentralized safe network subscribers (16) is configured as a failsafe point-to-point communication (36) based on a chain of point-to-point relationships (36) from one safety island (1) to a subsequent safety island (2), wherein one decentralized safe network subscriber (16) of the safety island (1) defines a master (32) and one decentralized safe network subscriber (16) of the subsequent safety island (2) defines a slave, so that a concatenation of master-slave relationships between safety islands (1,2,3) forms the chain of point-to-point relationships in order to be able to provide safety functions between and covering the decentralized safe network subscribers (16).

2. The control system (10) according to claim 1,
wherein the decentralized safe network subscribers (16) are associated with associated safety data input items and/or safety data output items (12, 14) each of which have no own decentralized safety controller for controlling a safety-relevant application, so that the decentralized safe network subscribers (16) with the associated safety data input items and/or safety data output items (12, 14) are grouped into safety islands (1, 2, 3), with each safety island comprising at least one decentralized safe network subscriber (16).

3. The control system (10) according to claim 2,
wherein the decentralized safe network subscribers (16) have means for fail-safe cross-communication within the safety islands (1, 2, 3).

4. The control system (10) according to claim 2 or 3, wherein island-covering safety functions are provided in which the decentralized safe network subscribers (16) of the safety islands (1, 2, 3) communicate with each other in a fail-safe manner across islands through the fail-safe point-to-point communication (36).

5. The control system (10) according to any one of the preceding claims,
wherein system-wide fail-safe communication is automatically established between the decentralized safe network subscribers (16) by the fail-safe point-to-point communication (36).

6. The control system (10) according to any one of the preceding claims,
wherein, by means of the dataflow automatically established by the fail-safe point-to-point communication (36) between the decentralized safe network subscribers, a software busbar (30) is formed as a substitution for a hardware connection, which represents an automatically generated safe data flow between smart safety modules with a defined data width, and wherein in particular each safety island (1, 2, 3) exactly occupies one data line (38) of the software busbar (30).

7. The control system (10) according to any one of the preceding claims,
wherein a safe communication protocol is used for the fail-safe point-to-point communication (36) between the decentralized safe network subscribers (16).

8. The control system (10) according to claim 7, wherein an application program itself or a lower level routing layer
i) evaluates the data contained in the fail-safe communication protocol; and
ii) automatically routes telegrams of the lower level routing layer from a source to the respective destination address.

9. The control system (10) according to any one of the preceding claims,
wherein the decentralized safe network subscribers (16) each have a unique safety address which can be determined by means of a switch and/or by means of software in the decentralized safe network subscriber (16).

10. The control system (10) according to any one of the preceding claims,
wherein standard telegrams between the decentralized safe network subscribers (16) are routed in the non-safe communication master (22).

11. The control system (10) according to claim 10,
wherein the routing of the standard telegrams is performed by an application program in the form of copy commands which are configured and/or parameterized depending on the addressing of the decentralized safe network subscribers (16).

12. The control system (10) according to claim 10,
wherein the communication master (22) generates a routing table and automatically routes the telegrams from the source to the destination address using the routing table.

13. The control system (10) according to any one of the preceding claims,
wherein the data width in the telegram traffic between the network subscribers controlled by the non-safe communication master (22) is the same for all point-to-point connections between the decentralized safe network subscribers (16).

## Revendications

1. Système de commande (10) destiné à commander des processus critiques pour la sécurité dans une installation automatisée via un réseau de communication (20), où
- le système de commande (10) comprend un maître de communication (22) non sécurisé pour commander la communication non sécurisée sur le réseau (20) et une pluralité de participants au réseau (12, 14, 16, 18),
- au moins certains des participants au réseau comprennent respectivement une commande de sécurité (17) décentralisée qui leur est propre afin de commander une application liée à la sécurité et sont ainsi conçus comme des participants au réseau (16) sécurisés et décentralisés,
- les participants au réseau (16) sécurisés et décentralisés sont conçus pour exécuter eux-mêmes les fonctions de sécurité et/ou les combinaisons de sécurité pertinentes pour eux, les participants au réseau (16) sécurisés et décentralisés présentant respectivement une adresse de sécurité non équivoque,
- les participants au réseau (16) sécurisés et décentralisés sont regroupés en îlots de sécurité (1, 2, 3), les îlots de sécurité comprenant respectivement un participant au réseau LPSDO (16) sécurisé et décentralisé avec lequel sont respectivement combinés logiquement en tant que satellites plusieurs objets d'entrée de données de sécurité (objets SDI, 12) et/ou objets de sortie de données de sécurité (objets SDO, 14), et
- une communication (36) entre les participants au réseau (16) sécurisés et décentralisés est conçue en tant que communication point-à-point (36) sans erreur, sur la base d'une chaîne de liaisons point-à-point (36) d'un îlot de sécurité (1) à un îlot de sécurité (2) suivant, où un participant au réseau (16) sécurisé et décentralisé de l'îlot de sécurité (1) constitue un maître (32) et un participant au réseau (16) sécurisé et décentralisé de l'îlot de sécurité (2) suivant constitue un esclave, de sorte qu'un enchaînement de liaisons maître-esclave entre îlots de sécurité (1, 2, 3) constitue la chaîne de liaisons point-à-point afin de pouvoir mettre à disposition des fonctions de sécurité globales entre les participants au réseau (16) sécurisés et décentralisés.

2. Système de commande (10) selon la revendication 1,
dans lequel les participants au réseau (16) sécurisés et décentralisés sont combinés à des objets d'entrée de données de sécurité et/ou de sortie de données de sécurité (12, 14) attribués qui ne présentent respectivement aucune commande décentralisée qui leur soit propre afin de commander une application liée à la sécurité, de sorte que les participants au réseau (16) sécurisés et décentralisés soient regroupés en îlots de sécurité (1, 2, 3) avec les objets d'entrée de données de sécurité et/ou de sortie de données de sécurité (12, 14) attribués, chaque îlot de sécurité comprenant au moins un participant au réseau (16) sécurisé et décentralisé.

3. Système de commande (10) selon la revendication 2,
dans lequel les participants au réseau (16) sécurisés et décentralisés présentent à l'intérieur des îlots de sécurité (1, 2, 3) des moyens de communication transversale sans erreur.

4. Système de commande (10) selon la revendication 2 ou 3,
dans lequel des fonctions de sécurité à l'échelle des îlots sont mises à disposition, dans lequel les participants au réseau (16) sécurisés et décentralisés des îlots de sécurité (1, 2, 3) communiquent ensemble sans erreur à l'échelle des îlots au moyen de la communication point-à-point (36) sans erreur.

5. Système de commande (10) selon l'une des revendications précédentes,
dans lequel une communication sans erreur à l'échelle de l'installation entre les participants au réseau (16) sécurisés et décentralisés est automatiquement établie au moyen de la communication point-à-point (36) sans erreur.

6. Système de commande (10) selon l'une des revendications précédentes,
dans lequel, au moyen du flux de données automatiquement établi par la communication point-à-point (36) sans erreur entre les participants au réseau sécurisés et décentralisés, est conçu en tant que substitut pour une liaison matérielle un rail conducteur-logiciel (30) qui constitue un flux de données sécurisé automatiquement produit entre des modules de sécurité intelligents avec une largeur de données définie, et en particulier chaque îlot de sécurité (1, 2, 3) occupe fermement exactement une ligne de données (38) du rail conducteur-logiciel (30).

7. Système de commande (10) selon l'une des revendications précédentes,
dans lequel un protocole de communication sécurisé est utilisé pour la communication point-à-point (36) sans erreur entre les participants au réseau (16) sécurisés et décentralisés.

8. Système de commande (10) selon la revendication 7,
dans lequel, par un programme d'application lui-même ou une couche de routage se situant en-dessous,
i) les données contenues dans le protocole de communication sans erreur sont valorisées et
ii) des télégrammes de la couche de routage se situant en-dessous sont automatiquement routés depuis une source jusqu'à l'adresse cible correspondante.

9. Système de commande (10) selon l'une des revendications précédentes,
dans lequel les participants au réseau (16) sécurisés et décentralisés présentent respectivement une adresse de sécurité non équivoque qui peut être fixée au moyen d'un commutateur et/ou au moyen d'un logiciel dans le participant au réseau (16) sécurisé et décentralisé.

10. Système de commande (10) selon l'une des revendications précédentes,
dans lequel, dans le maître de communication (22) non sécurisé, des télégrammes standards sont routés entre les participants au réseau (16) sécurisés et décentralisés.

11. Système de commande (10) selon la revendication 10,
dans lequel le routage des télégrammes standards par un programme d'application est réalisé sous la forme d'instructions de copiage qui sont configurées et/ou paramétrées en fonction de l'adressage des participants au réseau (16) sécurisés et décentralisés.

12. Système de commande (10) selon la revendication 10,
dans lequel le maître de communication (22) produit une table de routage et route automatiquement les télégrammes depuis la source jusqu'à l'adresse cible en se fondant sur la table de routage.

13. Système de commande (10) selon l'une des revendications précédentes,
dans lequel la largeur de données dans la circulation des télégrammes commandée par le maître de communication (22) non sécurisé entre les participants au réseau est la même pour toutes les liaisons point-à-point entre les participants au réseau (16) sécurisés et décentralisés.
